# EUROPEAN PATENT APPLICATION

(11) **EP 2 053 494 A2**
(43) Date of publication of application: **29.04.2009**
(21) Application number: 08167171.1
(22) Date of filing: 21.10.2008
(51) Int. Cl.: G06F 3/041

(54) **System lock**

(30) Priority: 22.10.2007 CA 2607410
(71) Applicant: Psion Teklogix Inc., Mississauga, Ontario L5N 7J9 (CA)
(72) Inventor: Newman, Nader, Brampton, Ontario L7A 1S9 (CA); Pacheco, Danny, Mississauga, Ontario L5C 3P7 (CA); Beatty, Kevin, Elmira, Ontario N3B 1Y4 (CA); Paunescu, Radu, Toronto, Ontario M4A 1WA (CA); Tenn, David, Markham, Ontario L3R 2L1 (CA)
(74) Representative: Carpintero Lopez, Francisco

(57) **Abstract**

A system and method are described for locking a touch sensitive screen input component of a device. The system and method receives input from an input component, adds the received input to a input sequence, and checks the input sequence against a key sequence. If the input sequence matches the key sequence, the system and method toggle the locked state of device input components.

## Description

### FIELD OF THE INVENTION

The invention relates generally to devices with touch sensitive screens, and in particular to a system for locking the input from the touch sensitive screen.

### BACKGROUND

Touch screens are becoming more common on electronic devices such as laptops, personal digital assistant (PDA) and PDA type devices, hand held computers, hand held barcode readers, and hand held RFID tag readers.

For portable devices it is often desirable to lock the input received from the keyboard to prevent undesirable input as a result of keys being hit while carrying or transporting the device. For example, a portable phone may have a feature to lock the keypad to prevent pressing keys when the phone is in the pocket. However, the sequence used to lock the keyboard may only be available through selection from an onscreen menu.

Additionally, the sequence used to unlock may include pressing and holding a single button for a period of time. In situations where the device is placed into locked and unlocked states repeatedly, this may become time consuming. Furthermore, the use of a single key to unlock the device may result in undesired unlocking if the key is in a place that is commonly contacted. Placing the single key in a location that is unlikely to be randomly pressed, may necessitate placing the key in an inconvenient location for use by the device user.

It is desirable to have a device with the ability to enable and disable the input from input devices including a touch screen.

### SUMMARY

In accordance with the present disclosure there is provided a system for locking device input. The system comprises a plurality of device input components comprising a touch screen input component and a key input component, and an input locking sub system for selectively locking at least the touch sensitive screen input component when a first input sequence is received from the plurality of keys that matches a specific key sequence, and for selectively unlocking locked input components, including the touch sensitive screen input, when a second input sequence is received from the plurality of keys that matches the specific key sequence.

In accordance with the present disclosure there is provided a method for locking input of a device, the device input comprising a touch sensitive screen input component and a key input component. The method comprises receiving an input from the key input component, adding the received input to an input sequence, checking the input sequence against a specific key sequence, and toggling the locked state of at least the touch sensitive screen input component when the input sequence matches the specific key sequence.

In accordance with the present disclosure there is provided a computer-readable medium storing instructions or statements for use in the execution in a computer of a method of locking input of a device, the device input comprising a touch sensitive screen input component and a key input component. The method comprises receiving an input from the key input component, adding the received input to an input sequence, checking the input sequence against a specific key sequence, and toggling the locked state of at least the touch sensitive screen input component when the input sequence matches the specific key sequence.

In accordance with the present disclosure there is provided a propagated signal carrier carrying signals containing computer-executable instructions that can be read and executed by a computer, the computer-executable instructions being used to execute a method of locking input of a device, the device input comprising a touch sensitive screen input component and a key input component. The method comprises receiving an input from the key input component, adding the received input to an input sequence, checking the input sequence against a specific key sequence, and toggling the locked state of at least the touch sensitive screen input component when the input sequence matches the specific key sequence.

### BRIEF DESCRIPTION OF THE DRAWINGS

Illustrative embodiments of the invention will now be described with reference to the following drawings in which:
Figure 1 depicts in a functional block diagram a system for controlling the locking and unlocking of a device with a touch screen and keys;
Figure 2 shows in a block diagrams the logical components of the locking system;
Figure 3 depicts in a flow chart a method of locking and unlocking the device input; and
Figure 4 depicts in a logical schematic an object oriented implementation of the input locking sub-system.

### DETAILED DESCRIPTION

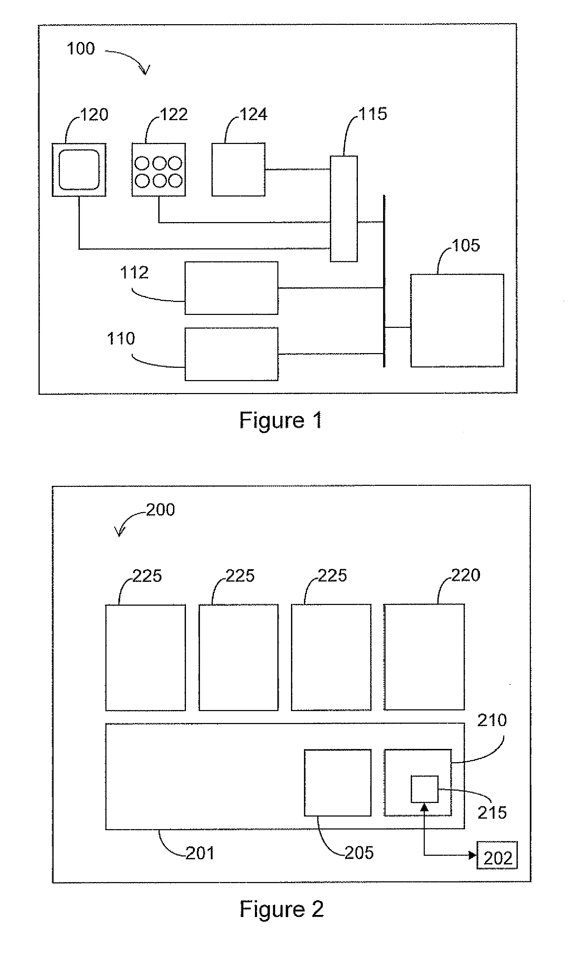

Figure 1 depicts in a functional block diagram a system for controlling the locking and unlocking of a device with a touch screen and keys. The system 100 comprises a processor 105. The processor 105 may be programmed to execute instructions in volatile memory 112. The instructions include instructions for carring out the input locking/unlocking as further described herein. The instructions may be loaded into the volatile memory 112 from non volatile memory 110. The system further comprising an input controller 115 for communicating input instructions from a plurality of input devices 120, 122, 124. The input devices comprise a touch sensitive screen 120 and a plurality of input keys 122. The input components may further include one or more additional input devices such as, for example, a barcode reader, or a radio frequency identification (RFID) tag reader. The touch sensitive screen 120 is also used to display output from the device to a user. Additional output devices (not shown) may also be included such as, for example, a printer, a speaker for auditory output, or an RFID tag writer.

The system 100 as described in figure 1 is a representative system for the purpose of clearly describing the locking and unlocking system 100. The system may include additional components, and/or the components described may be incorporated into a single component. For example, a display controller may be incorporated into the system 100 to control the information displayed on the touch sensitive screen 120. Functions of the input controller 115 could be implemented in the processor hardware and/or the instructions stored in the volatile memory 112.

Figure 2 shows in a block diagram 200 the logical components implemented by the execution of the commands stored in volatile memory 112 (see figure 1). The components comprise an operating system (OS) 201. The OS 201 provides a common interface for the device components 105, 110, 112, 115, 120, 122, 124 to applications, for example running applications 225 and input locking control application 220. The OS 201 may comprise an input sub-system 205. The input sub-system 205 receives input signals 201 from the input components 120, 122, 124 through the input locking sub-system 210 and provides the input to applications (by way of the OS 201) as required. The required input provided to applications may include, for example, key codes of keys that were pressed, the location of a touch on the screen, barcode data, RFID tag data etc. The applications may use this input information in a variety of ways, for example for controlling the operation of the device, for specifying device actions, decoding barcode data, etc.

The input locking sub-system 210 comprises input locking sub-system settings 215. These settings 215 may be stored in non volatile memory 110 and loaded into volatile memory 112 during system operation. The settings 215 control the operation of the input locking sub-system 210 as further described below. The input locking sub-system 210 locks the device input upon receiving a particular key sequence. Upon receiving the same key sequence, the input locking sub-system 210 unlocks the device input. The input locking sub-system 210 toggles the locked state of the touch sensitive screen 120 (and possibly additional input components as described further herein) upon receiving an input sequence that matches a specified key sequence.

When the input locking sub-system 210 locks the device input, the OS input sub-system 205 does not receive input signals, even if the device input components produce input signals 202. As a result of the operation of the input locking subsystem 210, it appears to the OS 201 that no input has occurred, When the input locking sub-system 210 unlocks the device, all input signals are passed to the OS input sub-system 205, which may then process them in the appropriate manner.

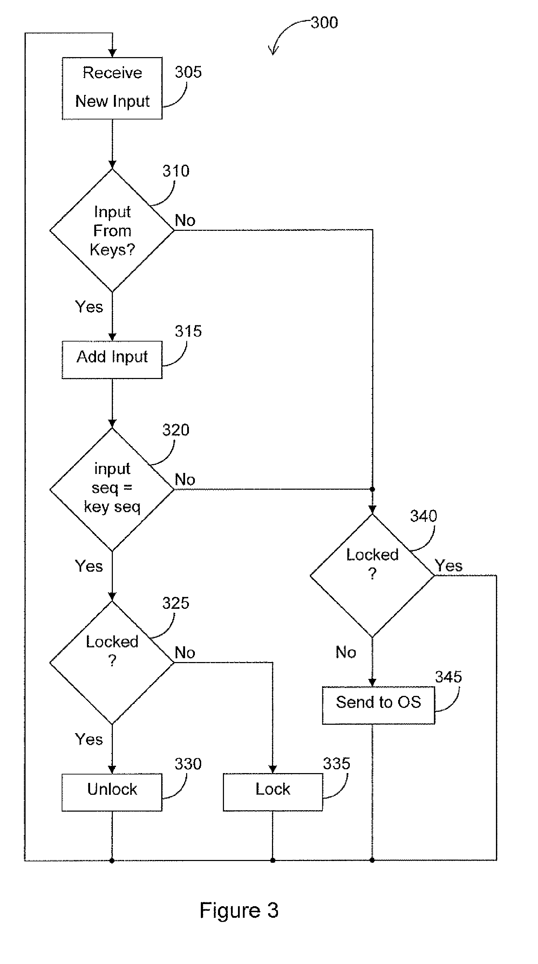

Figure 3 depicts in a flow chart a method 300 of locking and unlocking the device input. The method 300 begins at step 305 when a new input is received from the input components. The new input may be from any of the input components, such as for example, the touch sensitive screen 120, the input keys 122 or the additional input component 124 (see figure 1). At step 310 the input locking sub-system 210 (see figure 2) determines if the input is from the input keys. If the input is from the input keys (i.e. a user has pressed one of the input keys of the input component 122) the input locking sub-system 210 adds the input to an input sequence. The input sequence is used to hold a sequence of inputs.

The length of the input sequence may be controlled by the input locking sub-system settings as described further herein. Once the input is added to the input sequence, the input locking sub-system 210 compares the input sequence against the key sequence at step 320. The key sequence may be specified by the input locking sub-system settings. If the input sequence matches the specified key sequence, the input locking sub system determines if the input is locked or unlocked at step 325. If the input is locked, the input locking sub-system 210 unlocks the input at step 330. If at step 325, it is determined that the input is unlocked, the input locking sub-system 210 locks the input at step 335. If at step 310, the input locking sub-system 210 determines that the input is not from the input keys, execution continues to step 340. If at step 320, the input sequence does not match the key sequence, then processing continues to step 340. At step 340, the input locking sub-system 210 determines if the input is locked. If the input is locked, the execution returns to step 305, and waits for further input. If at step 340, it is determined that the input is unlocked, then the input locking sub-system 210 passes the received input (from step 305) to the OS input sub-system 205 for processing.

The above system describes intercepting input from devices and passing them onto the OS input sub-system 205 if the input is not locked. The OS may provide low-level input sub-systems. These low-level sub-systems may be responsible for communicating with the input components and converting input signals into inputs that are useable by the OS input sub-system 205, and the input locking sub-system 210. The low-level sub-systems may include for example device drivers for converting input component specific signals into inputs that are recognizable and/or understood by the OS 201.

The method and steps of the input locking sub-system may be implemented in commands executed by the processor. The commands may be compiled from a input locking sub-system described in a programming language. The programming language used to describe the input locking sub-system may be described using an object oriented (OO) programming language and paradigm. Alternatively the input locking sub system may be described as a monolithic code block.

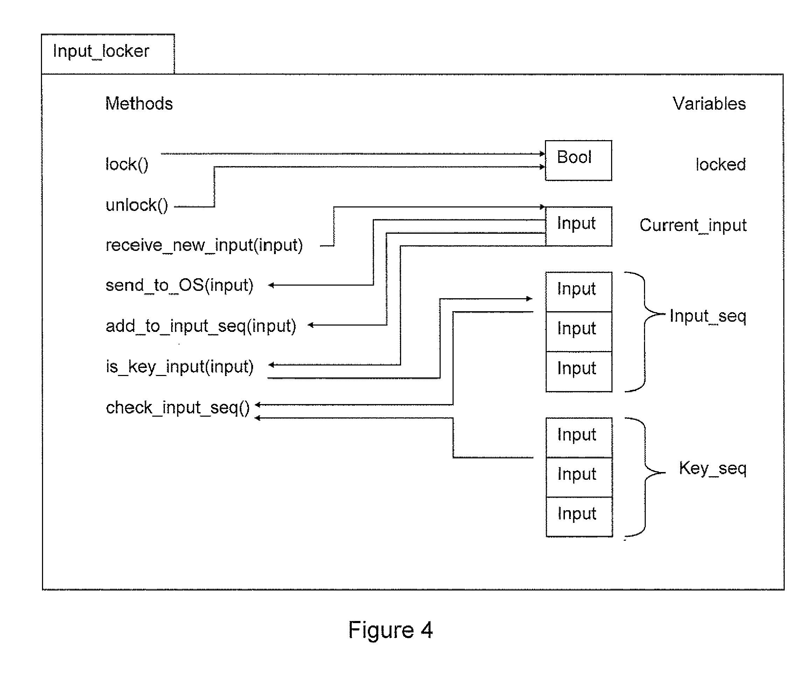

Figure 4 depicts in a logical schematic an OO implementation of the input locking sub-system. The OO implementation comprises various methods 405 that are used to control the operation of the input locking sub-system. The methods 405 may use or change the information stored in various variables of the input locking sub-system OO implementation. Not all of the information that may be required by the methods 405 is depicted in figure 4 for clarity. For example, the method 'add_to_input_sequence(input)' may require the information stored in the variables 'key_sequence_length' and 'input_sequence_length' in order to determine the correct location for adding the new input. The various methods and variables are described below.

### Methods:

Void new_input(input)
   Called when new input is received from the input components.
   Does not return a value.
Bool lock()
   Called when the input is to be locked. Returns true if the input is successfully locked, false otherwise.
Bool unlock()
   Called when the input is to be unlocked. Returns true if the input is successfully unlocked, false otherwise.
Bool is_key_input(input)
   Called to determine if the received input is from the input keys.
   Returns true if the input is from input keys, false otherwise
Bool send_to_OS(input)
   Called to send the input to the OS if the device is not locked.
   Returns true if the input was successfully sent to the OS, false otherwise.
Bool add_to_input_sequence(input)
   Called to add the input to the input sequence. Returns true if the input is successfully added to the input sequence, false otherwise.
Bool check_input_sequence()
   Called to check to see if the input sequence matches the key sequence. Returns true if input sequence matches key sequence, false otherwise.

### Variables:

Input new_input
   new_input holds the received input.
   Input[] input_sequence
   input_sequence is an array of inputs that holds the current input sequence.
Input[] key_sequence
   key_sequence is an array of inputs that holds the key sequence used to lock/unlock the input.
Int input_sequence_length
   Input_Sequence_length is an integer that specifies the current length of the input sequence.
Int key_sequence_length
   Key_sequence_length is an integer that specifies the length of the key sequence used.
Bool locked
   locked is a Boolean that holds whether the device is locked (true) or unlocked (false)

If the input locking sub-system is implemented as described above, the method 'receive_new_input(input)' may be used to control the overall functioning of the input locking object. A pseudo code representation of the logic is provided below. The code below does not include all of the steps that may be included in the implementation. For example, the pseudo code does not check to determine if the various methods called were successfully executed.

```
    Receive_new_input(input)
     Bool keySequenceEntered
     NewInput ← input
     If (is_key_input(NewInput) = true) then:
        Add_to_input_sequence(input)
        KeySequenceEntered ← check_input_sequence()
        If (keySequenceEntered = true) then:
        If (locked() = true) then:
            Unlock()
         Elseif (locked() = false) then:
            Lock()
         Endif
        Endif
     Endif
     If (keySequenceEntered = false and locked = false) then:
        Send_to_OS(newInput)
    Endif
  End receive_new_input
```

The add_to_input_sequence(input) method may use the input_sequence_length and the key_sequence_length to properly add the the received input to the input sequence. The method may compare the input sequence length (which stores the current length of the input sequence) to the key sequence length. If the input sequence length is less then the key sequence length then the received input is appended to the input sequence and the input sequence length is increased by 1. If the input sequence length is equal to the key sequence length, then the first input of he input sequence is removed and the received input is appended to the input sequence.

The input sequence may be periodically cleared. For example, inputs can be removed (from the beginning of the input sequence) depending on how long ago they were received. As inputs are removed, the input_sequence_length is decreased. This may provide for a time limit in which the key sequence to toggle the locked state of the input must be received.

The input locking system described above provides for basic locking and unlocking of the input of the device. It may be desirable to allow the user of the device to control operation of the input locking sub-system. This may be accomplished by providing the input locking sub-system with a plurality of settings that control the input locking sub-system's operation. The settings may be set or modified by an input locking sub-system settings 215 (see Figure 2) application 220 (see Figure 2).

Some of the settings that may be controlled by the settings application 220 may include:
- Key sequence: sets the key sequence used for unlocking and locking the input. May also change the key sequence length variable if it is used
- Lock components: specifies the input components to lock/unlock when the key sequence is entered
- Exceptions: specifies input keys that are not locked when the input is locked.
- Lock sequence time: specifies the length of time the user has to enter the key sequence
- Display popup: specifies whether a popup should be displayed when the input is locked (and input is received). May also specify the length of time to display the popup.

The Lock components setting may be used to provide control over which keys or input devices are locked. For example, if the device is a handheld barcode scanner, the lock components may specify that the input locking sub system does not pass input received from the touch sensistive screen or from input keys (i.e. a keyboard or the like). The lock components settings can advantageously be used to pass (i.e. not lock) additional input components such as the barcode scanner. This can be used to allow for the barcode input (as well as the trigger input for activating the scanner) to be passed to the OS even if the other input components are locked. Those skilled in the art will appreciate that the barcode scanner input component may replaced with (or in addition to) an RFID reader, an image capture device or other type of input devices. These input devices may be actuated by a trigger or the like, and may be collectively referred to as additional input devices, as they are additional to the touch sensitive screen and the input keys. Other types of input devices may also be included as additional input devices, such as for example, fingerprint readers, magnetic card readers, etc.

The Exceptions settings may be used to specify specific inputs from an input device that are to be passed to the OS even if the device is locked. For example, if the device is an RFID reader which performs a read when a read key of the key components is pressed, the read key may be included as an exception. The read key input will then be passed onto the OS even if the input is locked.

In an illustrative embodiment of the input locking sub-system described herein, the key sequence used for locking/unlocking the input is a 3 key sequence (with no chording). The same sequence is used for locking and unlocking the device input.

The input locking sub-system can be advantageously used to allow device users to disable a touch sensitive screen as part of the locking functions. The system also provides the ability to enable/disable a popup that may be displayed on screen. Furthermore, the system input locking sub-system can lock/unlock input data coming in from select input devices, such as a barcode scanner that is activated from a trigger button as opposed to a scan button can be pressed, since the input from different input are not processed in the same manner.

The systems and methods according to the present invention may be implemented by any hardware, software or a combination of hardware and software having the above described functions. The software code, either in its entirety or a part thereof, may be stored in a computer-readable memory. Further, a computer data signal representing the software code which may be embedded in a carrier wave may be transmitted via a communication network. Such a computer-readable memory and a computer data signal are also within the scope of the present patent disclosure, as well as the hardware, software and the combination thereof.

While particular embodiments of the present invention have been shown and described, changes and modifications may be made to such embodiments without departing from the true scope of the invention.

## Claims

1. A system for locking device input, the system comprising:
a plurality of device input components comprising:
a touch screen input component; and
a key input component comprising a plurality of input keys; and
an input locking sub system for selectively locking at least the touch sensitive screen input component when a first input sequence is received from the plurality of keys that matches a specific key sequence, and for selectively unlocking locked input components, including the touch sensitive screen input, when a second input sequence is received from the plurality of keys that matches the specific key sequence.

2. The system as claimed in claim 1, wherein the plurality of device input components further comprise at least one additional input device.

3. The system as claimed in claim 2, wherein one of the at least one additional input devices is a trigger activated input device selected from the group comprising:
a barcode reader;
an image capture device; and
an RFID tag reader.

4. The system as claimed in claim 2, wherein the additional input device is not locked by the input locking sub system.

5. The system as claimed in claim 1, wherein the input locking sub system is part of an operating system (OS) of the device, the OS having an input sub system, the input locking sub system passes received inputs from unlocked input components.

6. The system as claimed in claim 1, the system further comprising:
a plurality of input locking sub system settings, the settings for controlling the behaviour of the input locking sub system; and
a input locking sub system settings applications for allowing the input locking sub system settings to be modified.

7. The system as claimed in claim 6, wherein the key sequence is specified as one of the plurality of input locking sub system settings.

8. The system as claimed in claim 7, the specific key sequence is a sequence of between 2 and 3 keys received from the key input component.

9. A method for locking input of a device, the device input comprising a touch sensitive screen input component and a key input component, the method comprising:
receiving an input from the key input component;
adding the received input to an input sequence;
checking the input sequence against a specific key sequence; and
toggling the locked state of at least the touch sensitive screen input component when the input sequence matches the specific key sequence.

10. The method as claimed in claim 9, further comprising at least one of:
toggling the locked state of the key input component;
passing the received input to an operating system(OS) of the device if the input component of the received input is not locked;
toggling the locked state of individual input components based on input locking sub system settings; and
modifying the locking sub system settings with a locking sub system settings application.

11. A computer-readable medium storing instructions or statements for use in the execution in a computer of a method of locking input of a device, the device input comprising a touch sensitive screen input component and a key input component, the method comprising:
receiving an input from the key input component;
adding the received input to an input sequence;
checking the input sequence against a specific key sequence; and
toggling the locked state of at least the touch sensitive screen input component when the input sequence matches the specific key sequence.

12. The computer-readable medium as claimed in claim 11, wherein the method further comprises at least one of:
toggling the locked state of the key input component;
passing the received input to an operating system(OS) of the device if the input component of the received input is not locked;
toggling the locked state of individual input components based on input locking sub system settings; and
modifying the locking sub system settings with a locking sub system settings application.

13. A propagated signal carrier carrying signals containing computer-executable instructions that can be read and executed by a computer, the computer-executable instructions being used to execute a method of locking input of a device, the device input comprising a touch sensitive screen input component and a key input component, the method comprising:
receiving an input from the key input component;
adding the received input to an input sequence;
checking the input sequence against a specific key sequence; and
toggling the locked state of at least the touch sensitive screen input component when the input sequence matches the specific key sequence.

14. The propagated signal carrier carrying signals as claimed in claim 13, wherein the method further comprises at least one of:
toggling the locked state of the key input component;
passing the received input to an operating system(OS) of the device if the input component of the received input is not locked;
toggling the locked state of individual input components based on input locking sub system settings; and
modifying the locking sub system settings with a locking sub system settings application.
